Europäisches Patentamt

European Patent Office

Office européen des brevets

(19)

(11) Veröffentlichungsnummer: **0 022 215**
**B1**

(12) ## EUROPÄISCHE PATENTSCHRIFT

(45) Veröffentlichungstag der Patentschrift:
**12.01.83**

(21) Anmeldenummer: **80103583.3**

(22) Anmeldetag: **25.06.80**

(51) Int. Cl.³: **C 08 G 18/08,** C 08 G 18/32,
C 08 G 18/54

(54) **Verfahren zur Herstellung von Formkörpern auf Polyurethanbasis.**

(30) Priorität: **07.07.79 DE 2927597**

(43) Veröffentlichungstag der Anmeldung:
**14.01.81 Patentblatt 81/2**

(45) Bekanntmachung des Hinweises auf die Patenterteilung:
**12.01.83 Patentblatt 83/2**

(84) Benannte Vertragsstaaten:
**AT BE CH DE FR GB IT LI**

(56) Entgegenhaltungen:
**FR-A-1 348 657**
**GB-A-1 071 457**
**GB-A-1 150 508**
**US-A-3 966 662**

**Die Akte enthält technische Angaben, die nach dem
Eingang der Anmeldung eingereicht wurden und die
nicht in dieser Patentschrift enthalten sind.**

(73) Patentinhaber: **BAYER AG, Zentralbereich Patente,
Marken und Lizenzen, D-5090 Leverkusen 1, Bayerwerk
(DE)**

(72) Erfinder: **Heine, Heinrich, Ing. grad., Mueritzstrasse 38,
D-5090 Leverkusen (DE)**

Verfahren zur Herstellung von Formkörpern auf Polyurethanbasis

Die vorliegende Erfindung betrifft ein Verfahren zur Herstellung von Formkörpern auf Polyurethanbasis durch Umsetzung von organischen Polyisocyanaten mit ausgewählten Polyhydroxylverbindungen zu einem im B-Zustand befindlichen, d.h. zu einem unterhalb 100° C, insbesondere unterhalb 40° C, lagerstabilen, festen, pulverisier- und schmelzbaren Zwischenprodukt, welches noch freie Isocyanat- und Hydroxylgruppen aufweist, und anschliessende Aushärtung nach oder unter gleichzeitiger Formgebung dieses Zwischenprodukts.

Feste, im sog. B-Zustand befindliche Polyurethane, d.h. partielle Umsetzungsprodukte aus organischen Polyisocyanaten und Polyhydroxylverbindungen, die bei Raumtemperatur noch freie Isocyanat- und Hydroxylgruppen aufweisen und dennoch bei Raumtemperatur oder ermässigt erhöhter Temperatur lagerstabil und erst durch Hitzeeinwirkung aushärtbar sind, sind bislang nicht bekannt geworden. Anderseits würden derartige sich im Zwischenzustand befindliche Gemische interessante, bei Raumtemperatur lagerfähige und zu einem beliebigen Zeitpunkt durch Hitzeeinwirkung aushärtbare Einkomponentensysteme darstellen.

Beim Verfahren der FR-A Nr. 1348657 werden thermoplastische, d.h. nicht vernetzte Polyurethane, in zwei Stufen hergestellt. Dabei werden im wesentlichen difunktionelle Ausgangsmaterialien zunächst zu einem bei erhöhter Temperatur noch fliessfähigen Vorprodukt umgesetzt, welches anschliessend ausserhalb des zu seiner Herstellung verwendeten Reaktionsgefässes zum Erstarren gebracht und zerkleinert wird. Schliesslich wird die so erhaltene, in zerkleinerter Form vorliegende, noch geringe Mengen an nicht umgesetzten Reaktivgruppen (Isocyanat- und Hydroxylgruppen) aufweisende Vorstufe durch Erhitzen zum ausreagierten thermoplastischen Polyurethan umgesetzt. Diese zweistufige Arbeitsweise ermöglicht die Herstellung von extrudierbaren Thermoplasten unter Verwendung einfacher Aggregate wie z.B. von einfachen Rührkesseln, da die besagte Vorstufe aus derartigen Apparaturen durch einfaches Ausgiessen entfernt werden kann. Eine einstufige Herstellung der thermoplastischen Polyurethane in einfachen Apparaturen wie z.B. Rührkesseln wäre nicht möglich, da das ausreagierte thermoplastische Material nicht mehr aus dem Reaktionsgefäss entfernt werden könnte. Anderseits müssen thermoplastische Polyurethane, die in Extrudern verarbeitet werden sollen, möglichst bereits vor ihrer Einspeisung in den Extruder ihre thermoplastischen Eigenschaften aufweisen. Dies wird beim Verfahren der Vorveröffentlichung während der zweiten Reaktionsstufe erreicht. Wie aus den Ausführungsbeispielen der Vorveröffentlichung ersichtlich, werden die Ausgangsmaterialien bereits während der ersten Stufe während eines beträchtlichen Zeitraums auf über 100° C erhitzt, so dass davon ausgegangen werden muss, dass im Produkt der ersten Stufe nur noch ganz geringe Konzentrationen an freien Isocyanat- und Hydroxylgruppen vorliegen. Zwischen der ersten und der zweiten Stufe besteht somit lediglich ein gradueller Unterschied, da sowohl das Produkt der ersten Stufe als auch das Endprodukt der zweiten Stufe ein thermoplastisches Material darstellt. Aufgrund der Lehre der Vorveröffentlichung konnte nicht erwartet werden, dass es möglich sein würde, auch vernetzte Polyurethane in zwei Stufen herzustellen, wobei die erste Stufe lagerstabil, thermoplastisch und in Lösungsmitteln löslich, und die Endstufe unlöslich, vernetzt, und daher duroplastisch ist. Ein derartiger prinzipieller Unterschied der Eigenschaften der Produkte der beiden Stufen bedingt nämlich die Gegenwart beträchtlicher Mengen an nicht ausreagierten Reaktivgruppen in der Zwischenstufe, so dass damit gerechnet werden musste, dass diese Zwischenstufe bei Raumtemperatur nicht ohne Veränderung ihrer Eigenschaften lagerfähig sein würde. Überraschenderweise wurde nunmehr dennoch gefunden, dass Kombinationen von organischen Polyisocyanaten der aus der Polyurethanchemie bekannten Art mit ausgewählten, nachstehend näher beschriebenen Polyhydroxylverbindungen zu derartigen, bei 0-40° C, insbesondere Raumtemperatur, lagerstabilen Zwischenstufen umgesetzt werden können, die noch freie Isocyanat- und Hydroxylgruppen aufweisen, so dass sie unter Hitzeeinwirkung vernetzbar sind.

Gegenstand der vorliegenden Erfindung ist ein Verfahren zur Herstellung von Formkörpern auf Polyurethanbasis durch Umsetzung von organischen Polyhydroxylverbindungen mit organischen Polyisocyanaten in einem NCO/OH-Äquivalentverhältnis von 0,8:1 bis 1,2:1 entsprechenden Mengenverhältnissen, gegebenenfalls unter Mitverwendung der in der Polyurethanchemie an sich bekannten Hilfs- und Zusatzstoffe, dadurch gekennzeichnet, dass man

a) als Polyhydroxylverbindungen:

aa) 3 Hydroxylgruppen aufweisende Alkoxylierungsprodukte des Ammoniaks mit einem Molekulargewicht von mindestens 149 und einem Hydroxylgruppengehalt von mindestens 12 Gew.%,

ab) mindestens 4 Hydroxylgruppen aufweisende Alkoxylierungsprodukte von aromatischen Polyaminen mit einem Molekulargewicht von mindestens 284 und einem Hydroxylgruppengehalt von mindestens 12 Gew.%,

ac) mindestens 3 phenolische Hydroxylgruppen aufweisende Phenolformaldehydkondensate mit einem Gehalt von mindestens 12 Gew.% an phenolischen Hydroxylgruppen,

ad) beliebige Gemische der unter aa bis ac genannten Polyhydroxylverbindungen, oder

ae) mindestens 25 Gew.% mindestens eines der unter aa bis ac genannten Polyhydroxylverbindungen enthaltende Gemische mit von diesen Polyhydroxylverbindungen verschiedenen, gegebenenfalls Äther- oder Estergruppen aufweisenden Polyhydroxylverbindungen des Molekulargewichtsbereichs 62 bis 3000, wobei dieses Gemisch eine mittlere OH-Funktionalität von mindestens 2,7 und einen Gehalt an Hydroxylgruppen von mindestens 12 Gew.% aufweisen, verwendet,

ba) das durch Vermischen der Reaktionspartner hergestellte Reaktionsgemisch bei 0 bis 100° C zu einem festen, pulverisier- und schmelzbaren, noch freie Isocyanat- und Hydroxylgruppen aufweisenden, im genannten Temperaturbereich jedoch nicht mehr weiter ausreagierenden Reaktionsprodukt umsetzt, oder

bb) das durch Vermischen der Reaktionspartner erhaltene Reaktionsgemisch unter Erhitzen auf 100 bis 250° C zur Reaktion bringt und die Reaktion kurz vor Gelieren des in diesem Temperaturbereich flüssigen Reaktionsgemischs durch Abkühlen auf eine unter 100° C liegende Temperatur abbricht, wobei ebenfalls ein unterhalb 100° C festes, pulverisier- und schmelzbares, noch freie Isocyanat- und Hydroxylgruppen aufweisendes Reaktionsgemisch erhalten wird, und

c) das gemäss ba oder bb erhaltene Reaktionsgemisch gegebenenfalls nach Pulverisierung oder Auflösen in einem geeigneten Lösungsmittel sowie gegebenenfalls nach seiner Durchmischung mit weiteren Hilfs- und Zusatzmitteln nach oder unter gleichzeitiger Formgebung durch Erhitzen auf 100 bis 250° C zu einem vernetzten, nicht mehr schmelzbaren Formkörper aushärtet.

Bei den beim erfindungsgemässen Verfahren einzusetzenden Polyhydroxylverbindungen handelt es sich um

a) Alkoxylierungsprodukte des Ammoniaks des Molekulargewichtsbereichs 149 bis 420 mit einer Hydroxylfunktionalität von 3 und einem Gehalt an Hydroxylgruppen von mindestens 12 Gew.%, vorzugsweise um ethergruppenfreie Alkoxylierungsprodukte des Ammoniaks wie z.B. Triethanolamin, Tripropanolamin, insbesondere Triisopropanolamin, Triisobutanolamin oder entsprechende Trialkanolamine mit unterschiedlichen Hydroxyalkylresten, wie sie z.B. durch Alkoxylierung von Mono- oder Dialkanolaminen, mit Alkylenoxiden, wie Ethylenoxid oder Propylenoxid, zugänglich sind, wobei das zur Alkylierungsreaktion eingesetzte Alkylenoxid bezüglich seiner Kohlenstoffkette vom Hydroxyalkylrest des zu alkoxylierenden Hydroxyalkylamins verschieden ist,

b) mindestens 4 Hydroxylgruppen aufweisende Alkoxylierungsprodukte aromatischer Diamine des Molekulargewichtsbereichs 284 bis 570 und mit einem Gehalt an Hydroxylgruppen von mindestens 12 Gew.%. Bevorzugte derartige Verbindungen sind solche, deren Hydroxyalkylreste im statistischen Mittel maximal eine Ethergruppe aufweisen, insbesondere solche, deren Hydroxyalkylreste ethergruppenfrei sind. Diese Verbindungen sind auf an sich bekannte Weise durch Alkoxylierung, insbesondere unter Verwendung von Ethylenoxid und/oder Propylenoxid von aromatischen Polyaminen, wie z.B. 1,4-Diaminobenzol, 2,4-Diaminotoluol, 2,6-Diaminotoluol, 4,4'-Diaminodiphenylmethan, 2,4'-Diaminodiphenylmethan oder Polyamingemische der Diphenylmethanreihe, wie sie durch die bekannte Anilin/Formaldehyd-Kondensation entstehen, erhältlich,

c) als Novolak bezeichnete Phenol/Formaldehyd-Kondensate, die eine Hydroxylfunktionalität von mindestens 3, einen Gehalt an Hydroxylgruppen von mindestens 12, im allgemeinen von ca. 15 bis 17 Gew.%, einen Erweichungspunkt von ca. 75 bis 150° C, vorzugsweise 75 bis 100° C, und als 30%ige Lösung in Kresol/Xylol (1:1) eine Viskosität von ca. 100 bis 1000, vorzugsweise 250 bis 500 mPa·s, aufweisen. Derartige phenolische Hydroxylgruppen aufweisende Phenol/Formaldehyd-Kondensate können beispielsweise gemäss Kunststoff-Handbuch, Bd. X, Duroplaste von Vieweg/Becker, Carl Hanser Verlag, München 1968, S. 30 und 47/48, oder Methoden der organischen Chemie, Makomolekulare Stoffe, Teil 2, Houben-Weyl, Bd. XIV/2, S. 272-273, Georg Thieme Verlag, Stuttgart, hergestellt werden,

d) beliebige Gemische der unter a bis c genannten Polyhydroxylverbindungen,

e) beliebige Gemische von organischen Polyhydroxylverbindungen, die mindestens 25, vorzugsweise mindestens 50 Gew.% mindestens einer der unter a bis c genannten Polyhydroxylverbindungen enthalten, und die neben diesen erfindungswesentlichen Polyhydroxylverbindungen gegebenenfalls Ether- oder Estergruppen aufweisende Polyhydroxylverbindungen des Molekulargewichtsbereichs 62 bis 3000 enthalten, die von den unter a bis c genannten Polyhydroxylverbindungen verschieden sind, wobei die Gemische eine mittlere Hydroxylfunktionalität von mindestens 2,7 und einen Gehalt an Hydroxylgruppen von mindestens 12 Gew.% aufweisen.

Beim erfindungsgemässen Verfahren können beliebige an sich bekannte aliphatische, cycloaliphatische, araliphatische oder aromatische Polyisocyanate eingesetzt werden, wie beispielsweise Tetramethylendiisocyanat, Hexamethylendiisocyanat, Dodecamethylendiisocyanat, Cyclohexan-1,3- und -1,4-diisocyanat sowie beliebige Gemische dieser Isomeren, 1-Isocyanat-3,3,5-trimethyl-5-isocyanatomethylcyclohexan, 1,3 und 1,4-Phenylendiisocyanat, 2,4- und 2,6-Toluylendiisocyanat sowie beliebige Gemische dieser Isomeren, 2,4- und 2,5-Hexahydrotoluylendiisocyanat sowie beliebige Gemische dieser Isomeren, Diphenylmethan-4,4'-diisocyanat, Naphthylen-1,5-diisocyanat, Triphenylmethan-4,4',4'-triisocyanat, Polyphenylpolymethylenpolyisocyanate, wie sie durch Anilin/Formaldehyd-Kondensation und anschliessende Phosgenierung erhalten werden, Carbodiimid/Isocyanat-Addukte aufweisende Polyisocyanate, wie sie gemäss der deutschen Patentschrift Nr. 1092007 erhalten werden, Diisocyanate, wie sie in der amerikanischen Patentschrift Nr. 3492330 beschrieben werden, Allophanatgruppen aufweisende Polyisocyanate, wie sie gemäss der britischen Patentschrift Nr. 994890, der belgischen Patentschrift Nr. 761626 und der veröffentlichten holländischen Patentanmeldung Nr. 7102524 beschrieben werden, Isocyanuratgruppen aufweisende Polyisocyanate, wie sie in den deutschen Patentschriften Nrn. 1022789 und 1027394 sowie in den deutschen Offenlegungsschriften Nrn. 1929034 und 2004048 beschrieben werden, Biuretgruppen aufweisende Polyisocyanate, wie sie in der deutschen Patentschrift Nr. 1101394 und in der britischen Patentschrift Nr. 889050 und in der französischen Patentschrift Nr. 7017514 beschrieben werden, durch Telomerisationsreaktionen hergestellte Polyisocyanate, wie sie in der belgischen Patentschrift Nr. 723640 beschrieben werden, Estergruppen aufweisende Polyisocyanate gemäss den britischen Patentschriften Nrn. 956474 und 1072956, ferner aliphatische, cycloaliphatische, araliphatische oder aromatische Polyisocyanate, wie sie von W. Siefgen in «Justus Liebigs Annalen der Chemie», 562, S. 75-136, genannt werden, Umsetzungsprodukte der obengenannten Isocyanate mit Acetalen gemäss der deutschen Patentschrift Nr. 1072385, Isocyanate, wie sie in den deutschen Patentschriften Nrn. 1022789 und 1027394 genannt werden. Selbstverständlich ist es auch möglich, beliebige Mischungen der obengenannten Polyisocyanate zu verwenden.

Zu den bevorzugten beim erfindungsgemässen Verfahren einzusetzenden organischen Polyisocyanaten gehören bei Raumtemperatur flüssige Polyisocyanate der Diphenylmethanreihe, d.h. die an sich bekannten Phosgenierungsprodukte von Anilin/Formaldehyd-Kondensaten, flüssige Gemische aus 2,4'- und 4,4'-Diisocyanatodiphenylmethan, durch teilweise Carbodiimidisierung oder Urethanisierung der Isocyanatgruppen verflüssigtes 4,4'-Diisocyanatodiphenylmethan oder 1-Isocyanato-3,3,5-trimethyl-5-isocyanatomethylcyclohexan (Isophorondiisocyanat, abgekürzt: IPDI).

Für das erfindungsgemässe Verfahren geeignete Hilfs- und Zusatzmittel sind z.B. Trockenmittel wie Zeolithpulver, ortho-Ameisensäuretriäthylester, Füllstoffe wie z.B. Quarzmehl, Kreide oder Aluminiumoxide, Pigmente wie z.B. Titandioxid, Eisenoxid oder organische Pigmente wie Phthalocyaninpigmente, Weichmacher wie z.B. Dioctylphthalat, Dibutylphthalat oder Triphenylphosphat oder lösliche organische Farbstoffe.

Zur Durchführung des erfindungsgemässen Verfahrens werden die Polyisocyanate und die Polyhydroxylverbindungen in solchen Mengen miteinander vermischt, die einem NCO/OH-Äquivalentverhältnis von 0,8:1 bis 1,2:1, insbesondere ca. 1:1, entsprechen. Dabei können die beispielhaft genannten Hilfs- und Zusatzmittel dem Gemisch oder den genannten Ausgangsmaterialien zugemischt werden.

Nach der Durchmischung der Reaktionspartner wird das Reaktionsgemisch nach einer beiden nachstehenden beschriebenen Methoden weiterbehandelt:

ba) das Reaktionsgemisch wird im Temperaturbereich von 0 bis 100° C, vorzugsweise 0 bis 40° C gelagert, wobei durch eine teilweise Reaktion der Isocyanatgruppen mit den Hydroxylgruppen ein im genannten Temperaturbereich festes Reaktionsprodukt entsteht, welches, beispielsweise durch IR-Spektroskopie, nachweisbare Isocyanat- und Hydroxylgruppen aufweist, und welches dennoch wegen des festen Aggregatzustandes des Produkts nicht vollständig aushärtet, d.h. im genannten Temperaturbereich unverändert lagerstabil ist. Das so entstehende Gemisch ist spröde und leicht pulverisierbar, es kann oft in den gängigen Lösungsmitteln, wie z.B. Methyläthylketon, Methylisobutylketon, Essigsäureäthylester, oder Gemischen dieser polaren Lösungsmittel mit aromatischen Kohlenwasserstoffen löslich sein. Beim Erhitzen auf 100 bis 250° C, insbesondere 120 bis 180° C, schmelzen die sich im sogenannten B-Zustand befindlichen Systeme vor ihrer Endaushärtung durch Reaktion der in ihnen noch vorliegenden freien Isocyanat- und Hydroxylgruppen,

bb) die Reaktionsgemische werden unter Erhitzen auf 100 bis 250° C, insbesondere 160 bis 200° C, gegebenenfalls nach Zwischenlagerung bei 0 bis 100° C zur Reaktion gebracht, wobei die Umsetzung kurz vor Gelieren des in diesem Temperaturbereich flüssigen Reaktionsgemischs durch Abkühlen auf unter 100° C, vorzugsweise unter 40° C, eingefroren wird. Hierbei entstehen ebenfalls im B-Zustand befindliche Zwischenstufen, die die unter ba genannten Eigenschaften aufweisen.

Die bei der Methode ba zu wählende Temperatur innerhalb der genannten Temperaturbereiche hängt naturgemäss von der Art der eingesetzten Ausgangsmaterialien ab und kann durch einen kurzen Vorversuch zuverlässig ermittelt werden. Das gleiche gilt bezüglich der nach der Methode bb einzustellenden Temperatur und bezüglich des Zeitpunkts, an welchem die Umsetzung durch Einfrieren abgebrochen werden muss. Die Methode bb empfiehlt sich insbesondere bei Verwendung von im Temperarturbereich von 0 bis 100° C festen Ausgangsgemischen. Bei Verwendung von im Temperaturbereich von 0 bis 100° C flüssigen Ausgangsgemischen kann nach beiden Methoden gearbeitet werden.

Die nach den Methoden ba oder bb erhaltenen Systeme sind bei Raumtemperatur lagerfähig und können zu einem beliebigen Zeitpunkt nach ihrer Herstellung in vernetzte, nicht mehr schmelzbare Formkörper verarbeitet werden. Hierzu können die im B-Zustand vorliegenden Systeme beispielsweise pulverisiert, gegebenenfalls mit weiteren Hilfs- und Zusatzstoffen der bereits genannten Art oder mit Katalysatoren für die Isocyanatadditionsreaktion versehen werden, und nach oder unter gleichzeitiger Formgebung beispielsweise in Formpressen bei 100 bis 250° C, vorzugsweise 120 bis 180° C, ausgehärtet werden. Bei der Erhitzung der im B-Zustand befindlichen Systeme auf diese Aushärtungstemperatur schmelzen die Zwischenprodukte vor ihrer endgültigen Vernetzung zu leicht verformbaren Schmelzen auf. Die Aushärtung der im B-Zustand befindlichen Zwischenstufen nach bzw. unter gleichzeitiger Formgebung kann auch unter Mitverwendung von Lösungsmitteln der beispielhaft genannten Art dergestalt erfolgen, dass die Zwischenstufen in einem derartigen Lösungsmittel gelöst und in Form ihrer Lösung formgebend verarbeitet werden, worauf sich nach oder unter gleichzeitigem Abdestillieren des Lösungsmittels der Härtungsprozess im genannten Temperaturbereich anschliesst.

Das erfindungsgemässe Verfahren eignet sich in hervorragender Weise zur Herstellung von Formkörpern, insbesondere für die Elektroindustrie, wie z.B. Isolatoren, Schalterteile, Umhüllungen für elektronische Bauteile, Transformatoren, Messwandler u.ä. oder auch als Bindemittel für hitzevernetzbare Pulverlacke oder lösungsmittelhaltige Lacke zur Herstellung von Beschichtungen beliebiger Art. Die beim erfindungsgemässen Verfahren einzusetzenden Ausgangsmaterialien können selbstverständlich auch ohne die erfindungswesentliche Isolierung der im B-Zustand befindlichen Zwischenstufe direkt zu Formkörpern der beispielhaft genannten Art verarbeitet werden, wobei die besonders gute Verträglichkeit der erfindungsgemäss einzusetzenden Polyhydroxylverbindungen mit den Polyisocyanaten von besonderem Vorteil ist.

Die in den nachstehend genannten Beispielen gemachten Prozentangaben beziehen sich, soweit nicht anderslautend vermerkt, auf Gewichtsprozente.

*Beispiel 1*

100 Gew.-Teile Triisopropanolamin werden mit 10 Gew.-Teilen einer Paste aus 50% Zeolithpulver und 50% Ricinusöl vermischt. Die Mischung wird auf 120° C erwärmt und anschliessend im Vakuum unter Rühren ca. 30 min bei 1 mbar entgast. Nach dem Erkalten auf Raumtemperatur werden dem Polyol 290 Gew.-Teile Quarzmehl (mittlere Korngrösse 0,04 mm) zugesetzt. Das so erhaltene Gemisch wird schliesslich bei Raumtemperatur mit 190 Gew.-Teilen Isophorondiisocyanat vermischt (NCO/OH-Äquivalentverhältnis = 1 : 0,9). Das so erhaltene bei Raumtemperatur flüssige Gemisch wird 8 d gelagert. Innerhalb dieser Zeit dickt das Reaktionsgemisch ein und erstarrt. Das erstarrte Reaktionsgemisch weist noch IR-spektroskopisch nachweisbare Isocyanat- und Hydroxylgruppen auf. Das erhärtete Material wird in einer Schlagstiftmühle zu einem Pulver mit einer Korngrösse von ca. 0,5 mm Ø gemahlen und anschliessend in eine mit Trennmittel versehene Pressform gegeben. Unter einem Druck von ca. 392 N/cm² und bei einer Temperatur von 160° C schmilzt das Pulver noch einmal auf und fliesst zu einer homogenen, lunkerfreien Platte zusammen, an der nach einer Nachhärtung 16 h bei 160° C folgende Werte ermittelt werden konnten:

Biegefestigkeit (DIN 53452) (MPa) 124
Schlagzähigkeit (DIN 53453) (kJ/m²) 7
Martensgrad (DIN 53462) (° C) 134

*Beispiel 2*

100 Gew.-Teile Novolak aus Phenol und Formaldehyd mit einem OH-Gehalt von 16 Gew.%, einer mittleren Hydroxylfunktionalität von ca. 6, einem Erweichungspunkt von 75 bis 90° C, einer Viskosität der 30%igen Lösung in Kresol/Xylol (1 : 1) von ca. 350 mPa·s werden auf 200° C erhitzt und bei dieser Temperatur mit einem ebenfalls auf 200° C erhitzten Diisocyanat gemäss Beispiel 1 verrührt (NCO/OH-Äquivalentverhältnis 1 : 1). Bei dieser Temperatur sind die beiden Komponenten sofort verträglich. Nach einer Rührzeit von 30 s wird das Gemisch in eine 80° C heisse Metallform gegossen, worin es im Verlauf von ca. 5 min erstarrt. Nach dieser Zeit kann eine homogene, leicht blasige, harte aber bröckelige Platte entformt werden, die in einer Schlagstiftmühle zu einem Pulver mit einem mittleren Korndurchmesser von 0,2 mm gemahlen wird. Dieses Pulver kann auf verschiedene Art und Weise weiterverarbeitet werden:

a) 100 Gew.-Teile des Pulvers werden mit 100 Gew.-Teilen Quarzmehl gründlich gemischt, anschliessend wird dieses Gemisch in eine kalte Pressform geschüttet und dann 1 h bei 160° C bei einem Druck von 392 N/cm² verbacken. Nach dem Abkühlen kann eine homogene, blasenfreie Platte entformt werden, die folgende Festigkeitswerte aufwies:

Biegefestigkeit (DIN 53452) (MPa) 128
Schlagzähigkeit (DIN 53453) (kJ/m²) 9
Martensgrad (DIN 53462) (° C) 168

b) 4 Gew.-Teile des Pulvers werden mit 100 Gew.-Teilen eines Quarzsandes von 1 mm Ø gemischt. Zusätzlich wird noch 1 Gew.-Teil eines festen Aminbeschleunigers (N,N,N′,N′-Tetramethyl-4,4′-diaminodiphenylmethan) zugefügt. Von dieser Mischung wird die Gelierzeit auf einer Tüpfelplatte bei 160° C bestimmt. Sie beträgt 60 s. Nach 4 min kann die erstarrte Masse von der Tüpfelplatte abgenommen werden.

Das gleiche Gemisch wird in ein mit Trennmittel behandelte, 160° C heisse Stahlform (40×40× 160 mm) geschüttet und mit einem Stapfer verdichtet. Nach 15 min ist die Masse vollständig durchgehärtet und es kann ein Prüfkörper entformt werden, der nach dem Abkühlen eine Biegefestigkeit von 6 MPa aufweist.

c) Das Pulver wird gleichmässig auf ein auf 160° C aufgewärmtes Blech aufgestreut. Bei der Berührung mit dem Metall schmilzt das Pulver sofort auf und ergibt einen gleichmässigen, leicht geschäumten Belag, der nach einer weiteren Härtung von 2 h bei 180° C duroplastischen Charakter aufweist.

**Patentanspruch**

Verfahren zur Herstellung von Formkörpern auf Polyurethanbasis durch Umsetzung von organischen Polyhydroxylverbindungen mit organischen Polyisocyanaten in einem NCO/OH-Äquivalentverhältnis von 0,8 : 1 bis 1,2 : 1 entsprechenden Mengenverhältnissen, gegebenenfalls unter Mitverwendung der in der Polyuräthanchemie an sich bekannten Hilfs- und Zusatzstoffe, dadurch gekennzeichnet, dass man

a) als Polyhydroxylverbindungen:

aa) 3 Hydroxylgruppen aufweisende Alkoxylierungsprodukte des Ammoniaks mit einem Molekulargewicht von mindestens 149 und einem Hydroxylgruppengehalt von mindestens 12 Gew.%,

ab) mindestens 4 Hydroxylgruppen aufweisende Alkoxylierungsprodukte von aromatischen Polyaminen mit einem Molekulargewicht von mindestens 284 und einem Hydroxylgruppengehalt von mindestens 12 Gew.%,

ac) mindestens 3 phenolische Hydroxylgruppen aufweisende Phenol/Formaldehyd-Kondensate mit einem Gehalt von mindestens 12 Gew.% an phenolischen Hydroxylgruppen,

ad) beliebige Gemische der unter aa bis ac genannten Polyhydroxylverbindungen, oder

ae) mindestens 25 Gew.% mindestens eines der unter aa bis ac genannten Polyhydroxylverbindungen enthaltenden Gemische mit von diesen Polyhydroxylverbindungen verschiedenen, gegebenenfalls Ether- oder Estergruppen aufweisenden Polyhydroxylverbindungen des Molekulargewichtsbereichs 62 bis 3000, wobei dieses Gemisch eine mittlere OH-Funktionalität von mindestens 2,7 und einen Gehalt an Hydroxylgruppen von mindestens 12 Gew.% aufweisen, verwendet,

ba) das durch Vermischen der Reaktionspartner hergestellte Reaktionsgemisch bei 0 bis 100° C zu einem festen, pulverisier- und schmelzbaren, noch freie Isocyanat- und Hydroxylgruppen aufweisenden, im genannten Temperaturbereich jedoch nicht mehr weiter ausreagierenden Reaktionsprodukt umsetzt, oder

bb) das durch Vermischen der Reaktionspartner erhaltene Reaktionsgemisch unter Erhitzen auf 100 bis 250° C zur Reaktion bringt, und die Reaktion kurz vor Gelieren des in diesem Temperaturbereich flüssigen Reaktionsgemischs durch Abkühlen auf eine unter 100° C liegende Temperatur abbricht, wobei ebenfalls ein unterhalb 100° C festes, pulverisier- und schmelzbares, noch freie Isocyanat- und Hydroxylgruppen aufweisendes Reaktionsgemisch erhalten wird, und

c) das gemäss ba oder bb erhaltene Reaktionsgemisch gegebenenfalls nach Pulverisierung oder Auflösen in einem geeigneten Lösungsmittel sowie gegebenenfalls nach seiner Durchmischung mit weiteren Hilfs- und Zusatzmitteln nach oder unter gleichzeitiger Formgebung durch Erhitzen auf 100 bis 250° C zu einem vernetzten, nicht mehr schmelzbaren Formkörper aushärtet.

## Claim

A process for the production of mouldings based on polyurethane by reacting organic polyhydroxyl compounds with organic polyisocyanates in quantitative ratios corresponding to an NCO/OH equivalent ratio of from 0.8:1 to 1.2:1, optionally in the presence of additives and auxiliaries known in polyurethane chemistry, characterized in that—

(a) the polyhydroxyl compounds used are formed by:

(aa) alkoxylation products of ammonia containing 3 hydroxyl groups and having a molecular weight of at least 149 and a hydroxyl group content of at least 12% by weight,

(ab) alkoxylation products of aromatic polyamines containing at least 4 hydroxyl groups and having a molecular weight of at least 284 and a hydroxyl group content of at least 12% by weight,

(ac) phenol/formaldehyde condensates containing at least 3 phenolic hydroxyl groups and having a phenolic hydroxyl group content of at least 12% by weight,

(ad) mixtures of the polyhydroxyl compounds mentioned in (aa) to (ac), or

(ae) mixtures containing at least 25% by weight of at least one of the polyhydroxyl compounds mentioned in (aa) to (ac) with other polyhydroxyl compounds optionally containing ether or ester groups and having a molecular weight in the range of from 62 to 3000, this mixture having a mean OH functionality of at least 2.7 and a hydroxyl group content of at least 12% by weight,

(ba) the reaction mixture prepared by mixing the reactants is reacted at from 0 to 100° C to form a solid, powderable and fusible reaction product which still contains free isocyanate and hydroxyl groups, but which does not react any further at temperatures in the above-mentioned range, or

(bb) the reaction mixture obtained by mixing the reactants is reacted by heating to between 100 and 250° C and the reaction is terminated just before gelation of the reaction mixture, which is liquid at temperatures in this range, by cooling to a temperature below 100° C, a powderable and fusible reaction mixture which still contains free isocyanate and hydroxyl groups and which is solid below 100° C again being obtained, and

(c) the reaction mixture obtained in accordance with (ba) or (bb), optionally after powdering or dissolution in a suitable solvent and optionally after admixture with further auxiliaries and additives, is hardened after or during forming by heating to between 100 and 250° C to form a cross-linked, infusible moulding.

## Revendication

Procédé de production de pièces moulées à base de polyuréthanne par réaction d'un composé polyhydroxylique organique avec des polyisocyanates organiques dans des proportions quantitatives correspondant à un rapport d'équivalents NCO/OH de 0,8:1 à 1,2:1, en utilisant éventuellement les adjuvants et additifs d'emploi connu dans la chimie des polyuréthannes, caractérisé en ce qu'on utilise

a) comme composés polyhydroxyliques:

aa) des produits d'alcoxylation de l'ammoniac, porteurs de trois groupes hydroxyle, de poids moléculaire au moins égal à 149 et à teneur en groupes hydroxyle d'au moins 12% en poids,

ab) des produits d'alcoxylation, porteurs d'au moins quatre groupes hydroxyle, de polyamines aromatiques ayant un poids moléculaire au moins égal à 284 et une teneur en groupes hydroxyle d'au moins 12% en poids,

ac) des produits de condensation phénol-formaldéhyde porteurs d'au moins trois groupes hydroxyle phénoliques ayant une teneur en groupes hydroxyle phénoliques d'au moins 12% en poids,

ad) des mélanges quelconques des composés polyhydroxyliques mentionnés en aa à ac, ou

ae) des mélanges contenant au moins 25% en poids d'au moins l'un des composés polyhydroxyliques mentionnés en aa à ac, avec des composés polyhydroxyliques différents de ces derniers, de poids moléculaire compris dans la plage de 62 à 3000 et présentant, éventuellement, des groupes éther ou ester, ce mélange présentant une fonctionnalité OH moyenne d'au moins 2,7 et ayant une teneur en groupes hydroxyle d'au moins 12% en poids,

ba) on transforme le mélange réactionnel, préparé en mélangeant les partenaires de réaction, à 0-100°C en un produit de réaction solide, pulvérisable et fusible, portant encore des groupes isocyanate et hydroxyle libres, mais ne pouvant pas réagir davantage dans la plage de températures mentionnée, ou bien

bb) on fait réagir le mélange réactionnel obtenu en mélangeant les partenaires de réaction par chauffage à 100-250°C, et on arrête la réaction peu avant la gélification du mélange réactionnel liquide dans cette plage de températures, par refroidissement à une température inférieure à 100°C, et on obtient alors également un mélange réactionnel solide, pulvérisable et pouvant fondre au-dessous de 100°C, portant encore des groupes isocyanate et hydroxyle libres, et

c) on fait durcir le mélange réactionnel, obtenu conformément à ba ou bb, éventuellement après pulvérisation ou dissolution, dans un solvant convenable ainsi que, le cas échéant, après son mélange avec d'autres adjuvants et additifs après formage ou avec formage simultané par chauffage à 100-250°C, en une pièce moulée réticulée, ne pouvant plus être fondue.